# EUROPEAN PATENT APPLICATION

(11) **EP 4 782 396 A1**
(43) Date of publication of application: **29.07.2026**
(21) Application number: 25153808.8
(22) Date of filing: 24.01.2025
(51) Int. Cl.: C01B 25/45, H01M 4/36, H01M 4/58

(54) **METHOD FOR PRODUCING CARBON COATED LITHIUM IRON PHOSPHATE FOR SECONDARY BATTERIES**

(71) Applicant: OCP SA, Casablanca 20200 (MA); Université Mohammed VI Polytechnique, Ben Guerir, 43150 (MA)
(72) Inventor: DAHBI, Mouad, 43150 Ben Guerir (MA); AQIL, Mohamed, 60000 Oujda (MA); TAYOURY, Marwa, 24000 El Jadida (MA); SEMLAL, Nawal, 24000 El Jadida (MA); ALAMI, Jones, 30040 Fes (MA)
(74) Representative: Gsmart

(57) **Abstract**

The present disclosure relates to a method for synthesizing a carbon coated lithium iron phosphate, the method comprising the following steps:
a. Preparing a FePO₄ hydrate precursor by mixing an iron containing compound and a phosphorus containing compound in a solvent at a pH ranging from 1.5 to 3.5 in presence of a precipitating agent that is also a carbon coating source;
b. Drying the FePO₄ hydrate precursor;
c. Mixing the dried FePO₄ precursor with a lithium salt and a source of carbon;
d. Sintering the mixture obtained after step c) in an inert atmosphere at a temperature ranging from 550°C to 1000°C for 1 to 15h.

## Description

### FIELD OF THE INVENTION

The present invention relates to the preparation of electrochemically active materials in lithium batteries. More specifically, the invention relates to a new and simplified method for preparing phosphate based composite cathode materials for lithium batteries.

### BACKGROUND OF THE INVENTION

Lithium ion batteries (LIBs) are the most reliable and useable electrochemical energy source for portable electronics, electric vehicles (EVs) and stationary storage applications. On the other hand, due to the clear acceleration of EV adoption around the world, 16 million vehicles in 2022, an important concern over the sustainable supply of battery materials have been stated. This includes lithium (Li), cobalt (Co), and nickel (Ni) in the cathode. On the other hand, oxide-based materials with a layered structure, namely lithium metal oxides (LiMO₂) and their dopant derivatives known as nickel-rich oxide, have several issues due to their low structural stability. For example, it is impossible to extract all lithium ions from LiCoO₂ during the charging process. Additionally, their doped derivatives LiNi_{1-x-y}CoₓMn_{y}O₂ and LiNi_{1-x-y}CoₓAl_{y}O₂ (respectively NCA and NMC) suffer from many drawbacks originating from the unstable electrode electrolyte interface and transition metal dissolution into the electrolyte. The latter result in undesirable phase transformations and structural instability leading to a deteriorated electrochemical performance and safety issues.¹

In this context, phosphate based materials such as lithium iron phosphate (LFP) present today a significant market value and are becoming an excellent candidate cathode in lithium-ion battery industry. Compared with other types of battery materials, LFP active material possesses several advantages. It had a highly theoretical capacity (170 mAhg⁻¹) with long cycling stability, by reason of its olivine structure which enables complete extraction and insertion of lithium ions during lithiation and delithiation processes. Furthermore, LFP has a good thermal stability, a low volume expansion, a low cost and high element abundances (LFP is the cheapest compound due to abundant Fe and P resources). Nevertheless, the main drawbacks, of this material, coming from its structure limitation, are the poor ionic conductivity and electronic conductivity.² In order to overcome these drawbacks, several attempts have been made such as (i) doping the material with foreign atoms, (ii) reducing the particle size, (iii) introducing a conductive material and (iv) surface powder coating.^{2,3} Carbon based surface coating is the most reported and most effective modification method to improve the specific capacity, rate capability and cycling performance of LFP based cathodes.^{2,4} The low cost and eco-friendliness of using carbon materials are one of the main advantages for large-scale commercial production. Different carbon coatings with various characteristics can be obtained depending on the carbon precursor and the used carbon coating methods. Physical deposition is a simple mixing method where the active material is directly mixed with carbon additive (carbon black, graphene, graphite, carbon nanotubes, carbon fiber...).⁵ However, this process generates a non-uniform layer with an insufficient electronic conductive network, which negatively affects the electrochemical performance.³ Wet chemical routes consist of dissolving organic material (glucose, sucrose, citric acid, ethylene glycol, etc.) in active material suspension solution. After removal of the solvent, the mixture is dried then sintered under inert gas in order to transform the organic substance into a carbon layer that is deposited on the surface of the active material particles. However, it is challenging to obtain a homogeneous coating exhibiting a core-shell like structure. Furthermore, a high amount of carbon content affects the lithium ion diffusion thus lowering the electrochemical properties of the electrode material. As well as, it can lead to dramatic decrease in volumetric charge-discharge capacity. As such, there is a need for a better cathode active material with uniform and controllable surface coating.⁶

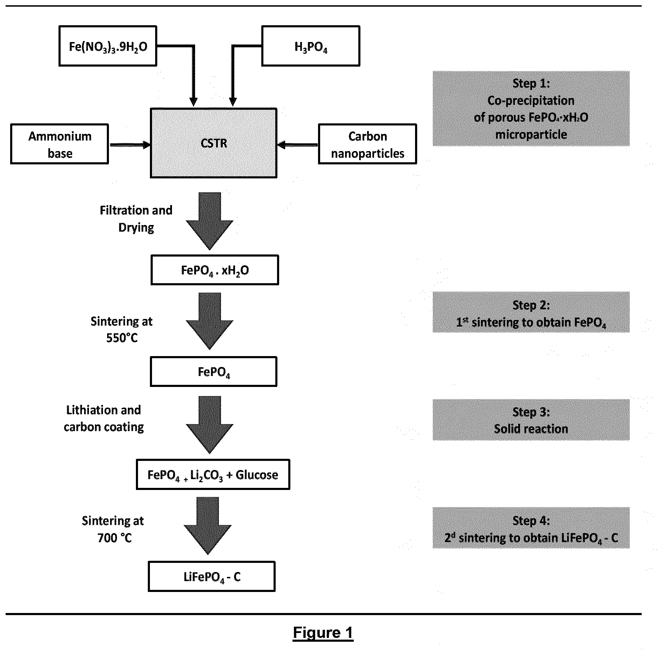

US2011/0027651A1 discloses a method for the synthesis of a nanoporous olivine type positive electrode material for lithium ion batteries.⁷ Among the represented olivine type positive electrode material, nanoporous lithium iron phosphate active material with a particle distribution of 6 µm exhibits a high tap density compared with nanoparticle LFP of 200 nm. Thus, result in a high gravimetric and volumetric capacities due to the effect of the sponge-like nanoporous morphology. However, to obtain this micrometer-sized LFP particle, as shown in figure 1, multiple synthesis and carbonization steps are requested. After the coprecipitation of the hydrated FePO₄, multiple process of sintering, solid mixing and carbon coating has been applied to finally obtain the carbon coated LFP.

The present invention aims at shortening the synthesis process, it provides a simplified method for preparing carbon coated LFP with superior electrochemical performance.

### SUMMARY OF THE INVENTION

The invention relates to a method for synthesizing a carbon coated lithium iron phosphate, the method comprising the following steps:
a. Preparing a FePO₄ hydrate precursor by mixing an iron containing compound and a phosphorus containing compound in a solvent at a pH ranging from 1.5 to 3.5;
b. Drying the FePO₄ hydrate precursor;
c. Mixing the dried FePO₄ precursor with a lithium salt and a source of carbon ;
d. Sintering the mixture obtained after step c) in an inert atmosphere at a temperature ranging from 550°C to 1000°C for 1 to 15h.

The invention also relates to a carbon coated lithium iron phosphate that may be prepared in accordance with the method of the invention as well as to a lithium battery comprising the carbon coated lithium iron phosphate.

Further aspects of the invention are as disclosed herein and in the claims.

### FIGURES

Figure 1 illustrates the previously reported synthetic route of phosphate based LFP active material.
Figure 2 illustrates an embodiment of the process of the invention for preparing a phosphate based LFP active material.
Figure 3 illustrates the XRD patterns of amorphous FePO₄ (example 2), crystallin FePO₄ (example 4-b) and carbon coated LiFePO₄ of example 5.
Figure 4 illustrates the Rietveld refinement of carbon coated LFP of example 5.
Figure 5 illustrates the Rietveld refinement of carbon coated LFP of example 6.
Figure 6 illustrates a scanning electron microscope (SEM) image of a carbon coated LFP cathode active material according to Example 5 at high magnification.
Figure 7 illustrates a SEM image of a carbon coated LFP cathode active material according to Example 5 at low magnification.
Figure 8 illustrates a SEM image of a carbon coated LFP cathode active material according to Example 6 at low magnification.
Figure 9 illustrates a cross-sectional SEM image of microscale and nanopatterned LFP.
Figure 10 illustrates the charging/ discharging characteristic profile of the lithium cell prepared by the electrode material of the example 6.
Figure 11 illustrates the capacity retention profile of the lithium cell prepared by the electrode material of the example 6.

### DESCRIPTION OF THE INVENTION

To shorten the synthesis process and provide a simplified method for preparing carbon coated LFP with superior electrochemical performance, an *in situ* carbon coating technique was developed by using a precipitating agent also used as a carbon precursor. Moreover, carbonization and sintering were combined in only one thermal treatment process.

The precipitating agent thus plays a double role, it allows the control of the pH and at the same time is used as a carbon precursor for *in situ* carbon coating.

In some embodiments, the proposed strategy consists of using a precipitating agent (carbon precursor) in presence of a sacrificial templating additive (e.g., polymer nanoparticles) during the synthesis process.

The thermal decomposition of the precipitating agent, and the sacrificial templating additive lead to the formation of nanopatterned electroactive material with only one step carbon coating route. This morphology provides a high conductance material with improved electrochemical performances electrodes.

The method of the invention allows obtaining LFP active material with uniform coating, controllable porosity and particle size.

Hence, the present invention relates to a method for synthesizing a carbon coated lithium iron phosphate (LiFePO₄-C), the method comprising the following steps:
a. Preparing a FePO₄·hydrate precursor by mixing an iron containing compound and a phosphorus containing compound in a solvent at a pH ranging from 1.5 to 3.5 in presence of a precipitating agent that is also a carbon coating source;
b. Drying the FePO₄·hydrate precursor;
c. Mixing the dried FePO₄ powder with a lithium salt ;
d. Sintering the mixture obtained in step c) in an inert atmosphere at a temperature ranging from 550°C to 1000°C for 1 to 15h.

### Preparation of the FePO₄ hydrate precursor

The FePO₄ hydrate precursor is prepared by mixing an iron containing compound and a phosphorus containing compound in a solvent at a pH ranging from 1.5 to 3.5 in presence of a precipitating agent that is also a carbon coating source. These conditions allow for the coprecipitation of the FePO₄ hydrate precursor.

The FePO₄·hydrate precursor is typically of formula FePO₄·xH₂O wherein x ranges from 1.5 to 4, preferably x is 2.

The solvent is typically water. However, the solvent can be an organic solvent, such as ethylene glycol.

The iron containing compound is typically selected from the group consisting of FeSO₄·7H₂O, Fe(NO₃)₃.9H₂O, Fe₂(SO₄)₃.nH₂O with n being undefined (Fe₂(SO₄)₃ hydrates), typically with n equal to 1, 4 or 7, FeCl₃.nH₂O with n being undefined (FeCl₃ hydrates), typically with n equal to 6, FeSO₄, Fe₂(SO₄)₃, Fe(NO₃)₃, Fe(O₂CCH₃)₂ FeC₂O₄.2H₂O and FeCl₃.

The phosphorus containing compound is typically selected from the group consisting of H₃PO₄, P₂O₅, (NH₄)₃PO₄, (NH₄)₂HPO₄ and (NH₄)H₂PO₄. The phosphorus containing compound is preferably a phosphoric acid solution (e.g., a phosphoric acid solution 2M).

The FePO₄ hydrate precursor is typically prepared by mixing equimolar amounts of iron containing compound and phosphorus containing compound.

The precipitating agent that is also a carbon coating source allows to obtain a pH ranging from 1.5 to 3.5. It is preferably an organic base of formula NR¹R²R³ wherein R', R² and R³ are each independently a hydrogen atom, an alkyl group (preferably a C₁-C₂₀-alkyl), an alkene group (preferably a C₂-C₂₀-alkene), an alkyne group (preferably a C₂-C₂₀-alkyne) or an aryl group to the solvent, provided that at least one of R', R² and R³ is not H. The organic base is preferably soluble in water. Controlling the pH to a value ranging from 1.5 to 3.5 ensures a proper nucleation and particle growth of iron phosphate hydrate. The organic base can be selected in the group consisting of water-soluble and secondary tertiary amines such as triethylamine, diethylamine, hexylamine, benzyalamine, aniline, pyridine or pyrrole.

The mixing is generally performed under stirring at a stirring speed of 100 to 1400 rpm, preferably at 1000 rpm.

The mixing is generally performed at a temperature ranging from 25 to 100°C, preferably from 50°C to 60°C.

The mixing is typically performed for a time ranging from 1 to 40 hours, preferably 20 hours.

The FePO₄ hydrate precursor is typically separated from the mixture by filtration. It may be washed, for instance with distilled water.

Sacrificial templating additives may be added during the preparation of the FePO₄ hydrate precursor. The addition of the sacrificial templating additives during the seed growth allows obtaining porous nanopatterned FePO₄ particles.

The sacrificial templating additives may be polymer nanoparticles, e.g., amphiphilic copolymers, lower critical solution temperature polymers, cellulose nanocrystals and any polymers with self-assembly properties, or carbon nanoparticles, e.g., carbon nano-sphere, carbon dote, fluorene and any carbon at nano scale.

### Drying of the FePO₄ hydrate precursor

The drying of the obtained FePO₄ hydrate precursor is typically performed in an oven at a temperature ranging from 80 to 250°C for 2 to 16 hours or by spray-drying. It allows obtaining a FePO₄ precursor in powder form.

In some embodiments, the FePO₄ hydrate precursor is dried in an oven at 80°C for 12 hours and then at 250°C for 2 hours.

### Mixing of the dried FePO₄ precursor with a lithium salt

The lithium salt is in solid state.

The lithium salt may be selected from the group consisting of lithium carbonate (Li₂CO₃), lithium citrate (Li₃C₆H₅O₇), lithium hydroxide (LiOH), lithium acetate (CH₃COOLi), lithium nitrate (LiNO₃) and ithium sulphate (Li₂SO₄).

The lithium salt is preferably a lithium carbonate.

The dried FePO₄ precursor and the lithium salt are typically provided in stoichiometric amount.

The dried FePO₄ and the lithium salt are generally mixed using a powder mixing machine such as planetary mixer, centrifugal mixer, spray dryer or ball-milling. Preferably, a planetary mixer or centrifugal mixer is used, notably at a speed of 500 to 3000 rpm, preferably at 2000 rpm for 0.1 to 10 hours, preferably 1 hour.

The step of mixing the dried FePO₄ precursor with a lithium salt may be carried out in presence of an additional carbon precursor that is typically a glucose volatile solution (or any organic material such us sucrose, citric acid, ethylene glycol, etc.), for example a 15 wt.% of glucose solution. The dried FePO₄ precursor and the lithium salt may be added to the glucose solution after having been mixed. Once the volatile solution has evaporated, the resulting mixture can be engaged in the next step of the process, preferably after having been dried.

Preferably no additional carbon precursor is used in the process of the invention as the precipitating agent is also a source of carbon3

### Sintering

The FePO₄ precursors are transformed to a carbon coated porous LiFePO₄ material by a carbonization-calcination process.

Sintering of the mixture obtained after step c) is performed in an inert atmosphere at a temperature ranging from 550°C to 1000°C for 1 to 15h.

The inert atmosphere may be provided by any conventional inert gas or gas mixture, such as nitrogen.

The sintering is typically performed for 1 to 15 hours.

The thermal decomposition of the precipitating agent lead to a carbon coating layer of the positive active material.

The thermal decomposition of the sacrificial templating additive lead to the formation of electroactive material which is said to be "nanopatterned".

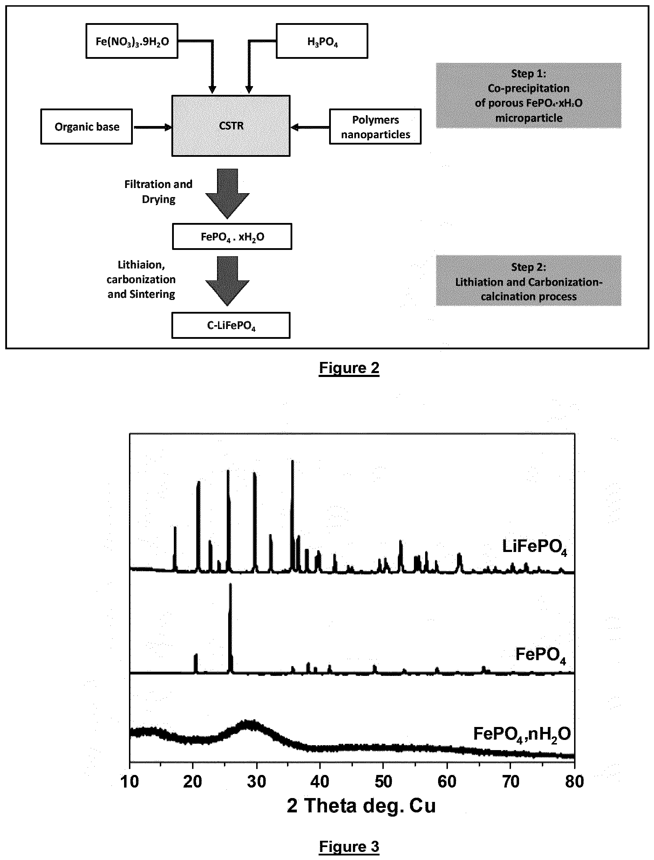

Figure 2 illustrates an embodiment of the process according to the invention.

In accordance with the embodiment illustrated in figure 2, the process according to the invention may be as described in the following. A phosphoric acid solution (or any of its derivative P₂O₅, (NH₄)₃PO₄, (NH₄)₂HPO₄ or (NH₄)H₂PO₄ ) was pumped into a 4 liters continuously stirred tank reactor. Simultaneously, an equimolar solution of an iron precursor Fe(NO₃)₃ (or FeSO₄·7H₂O, Fe(NO₃)₃.9H₂O, Fe₂(SO₄)₃.nH₂O, FeCl₃.nH₂O, FeSO₄, Fe₂(SO₄)₃, Fe(O₂CCH₃)₂ FeC₂O₄.2H₂O and FeCl₃) was pumped by the same rate. To ensure a proper nucleation and the particle growth of iron phosphate hydrate, an organic base was also pumped into the reactor to control the solution pH between 1.5 and 3.5. The temperature and stirring speed of the resulting mixture were fixed at 50°C and 1000 RPM during all the reaction time. After 20 hours at constant temperature and stirring speed, the resulting mixture was separated from the mixtures using filtration and were washed several times with distilled water. Finally, yellow-white FePO₄ hydrate powders were obtained after being dried in an oven at 80°C for 12h then at 250°C for 2h or spray dried.

Lithium was added by solid reaction, a stoichiometric amount of FePO₄ and Li₂CO₃, or any other source of lithium (Li₂CO₃, Li₃C₆H₅O₇, LiOH, LiC₂H₃O₂, LiNO₃, Li₂SO₄), were well mixed by using a powder mixing process (planetary mixer or centrifugal mixer or spray dryer or ball-milling).. The dried samples were calcined and carbonized in a furnace at a temperature ranging from 550°C to 1000°C under any conventional inert gas or inert/reduction mixture gas. Additionally, the heating process is not limited, but is preferred to last 1 to 15 hours.

### Use of the obtained carbon coated porous LiFePO₄ material

The obtained carbon coated LiFePO₄ material can be used in a lithium battery. More specifically, the obtained carbon coated LiFePO₄ material may be used for the preparation of the cathode of the lithium battery.

The present invention also relates to a lithium battery comprising an anode, a cathode and a non-aqueous electrolyte, wherein the cathode contains a carbon coated porous LiFePO₄ material according to the present invention, a carbon additive (e.g., carbon black, graphene, graphite, carbon nanotube, carbon fiber...) and a polymer binder (e.g., PVDF, PTFE, CMC, PAA, PILs ...).

Figure 3 demonstrates a typical XRD patterns of as-synthesized FePO₄ hydrate·xH_{2O} powders in example 2, calcined FePO₄ powder obtained in example 4-b and carbon coated LiFePO₄ obtained in example 5. It can be seen that before thermal treatment, iron phosphate was precipitated in a complete amorphous phase and only FePO₄ was present after the calcination. Then, after the lithiation and calcination step, the XRD patterns of LFP composites exhibit all the characteristic peaks of crystalline LFP and match well with standard orthorhombic olivine phase.

The synthesis of the cathode material of the present invention is described in detail below. But the present invention is not limited to the examples described below. The present invention can be applied to develop phosphate based cathode material for secondary lithium/sodium ion batteries with the following general formula BFe₍₁₋ₓ₎Mₓ(PO₄)_{1-y}X_{y} where B is Li or Na and the iron in the LiFePO₄ composite electrode of the present invention can be substituted partially or completely with any other transition metals or a combination of transition metal (M= Ni, Co, Mn, V, Cr, Zr, Nb, Ti, Zn, Al, Mg) with 0≤x≤1 and phosphate can be doped with any other possible anion or combination of anions(X= SO₃, F) where 0.8≤y≤1.

Embodiments of the present invention will now be described by way of the following examples which are provided for illustrative purposes only, and not intended to limit the scope of the disclosure.

### EXAMPLES

### Example 1 (comparative)

Two litres of 1 molar Fe²⁺ solution was first prepared by dissolving FeSO₄·7H₂O in distilled water at room temperature. Fe²⁺ solution was transformed to Fe³⁺ solution after the addition, under continue stirring, of 1 equimolar of oxidizing agent (H₂O₂). Then, 1 litre of industrial phosphoric acid (2M) was mixed with the iron source solution in 4 litres reactor. The initial pH of the mixture is -0.8. The reactor is then closed and heated to 60 °C. The white precipitate started to form immediately after pumping NH₃·H₂O (2M) solution into the reactor. The NH₃·H₂O had served to control the desired pH value of the solution at 1.5-3.5. The reaction mixtures were continuously stirred at 1000 rpm for 1h.

### Example 2 (comparative)

In this example, a coprecipitation was carried out using an Fe³⁺ precursor. First, iron precursor and phosphoric acid were separately dissolved in distilled water at room temperature.

An equimolar solution of industrial phosphoric acid and iron precursor Fe(NO₃)₃.9H₂O (Fe₂(SO₄)₃.nH₂O and FeCl₃.nH₂O can also be used) were pumped into a continuously stirred tank reactor. To ensure proper nucleation and the particle growth of the precursor, an aqueous NH₃,H₂O solution (2M) was also pumped into the reactor to control the solution pH at 2. The temperature and stirring speed of the resulting mixture were fixed at 50°C and 1000 RPM during all the reaction time (~20h).

The XRD pattern of the as-synthesized FePO_{4.}nH₂O hydrate powders is provided on Figure 3.

### Example 3

Iron precursors and phosphoric acid were separately dissolved in distilled water at room temperature.

An equimolar solution of industrial phosphoric acid and iron precursor Fe(NO₃)₃.9H₂O (FeSO₄, Fe₂(SO₄)₃ and FeCl₃) were pumped into a continuously stirred tank reactor (CSTR). Triethylamine (2M) was used as a pH controller and was pumped continuously to the reactor. In the same time, a suspension solution of polymer nanoparticles was added to the reaction mixture before the FePO₄ formation. Those polymer nanoparticles were inserted inside FePO₄ during the particle growth as sacrificial mold. The target pH was fixed at a value of 1.5-3.5. The temperature and stirring speed of the resulting mixture were fixed at 50°C and 1000 rpm during all the reaction time (~20h).

### Example 4-a

The resulting mixture, obtained from examples 1, 2 and 3 were separated from the mixtures using filtration and were washed several times with distilled water. Finally, yellow-white FePO₄ hydrate powders were obtained after being dried in an oven at 80°C for 12 hours then at 250°C for 2 hours.

### Example 4-b (comparative)

The obtained resulting mixture from example 2 were separated from the mixtures using filtration and were washed several times with distilled water. Finally, yellow-white FePO₄ hydrate powders were obtained after being dried in an oven at 80°C for 12 hours then at calcined at 550°C for 2 hours.

The XRD pattern of the obtained calcined FePO₄ powder is provided on Figure 3.

### Example 5 (comparative)

Lithium was added by solid reaction, a stoichiometric amount of Li₂CO₃ was well mixed with the dried FePO₄ powder obtained in example 2 at a speed of 2000 rpm for 1 hour by using a planetary mixer or centrifugal mixer. Then the obtained mixture was added to a 15% of glucose solution and kept under stirring until the evaporation of the solvent. After that, the powder was placed in an oven and dried at 100°C overnight. The dried samples were calcined and carbonized at 700°C in a furnace for 10h under nitrogen atmosphere to obtain carbon coated LFP active material.

The XRD patterns of the obtained carbon coated LiFePO₄ is provided on Figure 3.

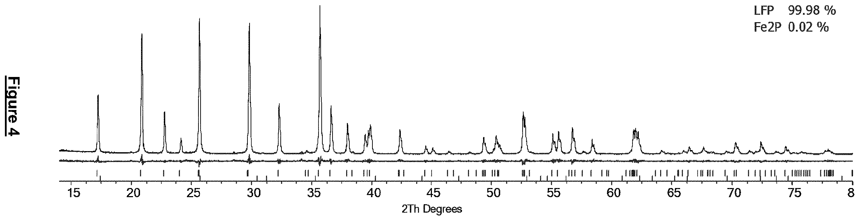

The Rietveld refinement of the obtained powder X-ray diffraction data is provided at figure 4. According to Rietveld refinement data, high purity of LFP phase was obtained, 99.98%, with an insignificant presence of Fe₂P.

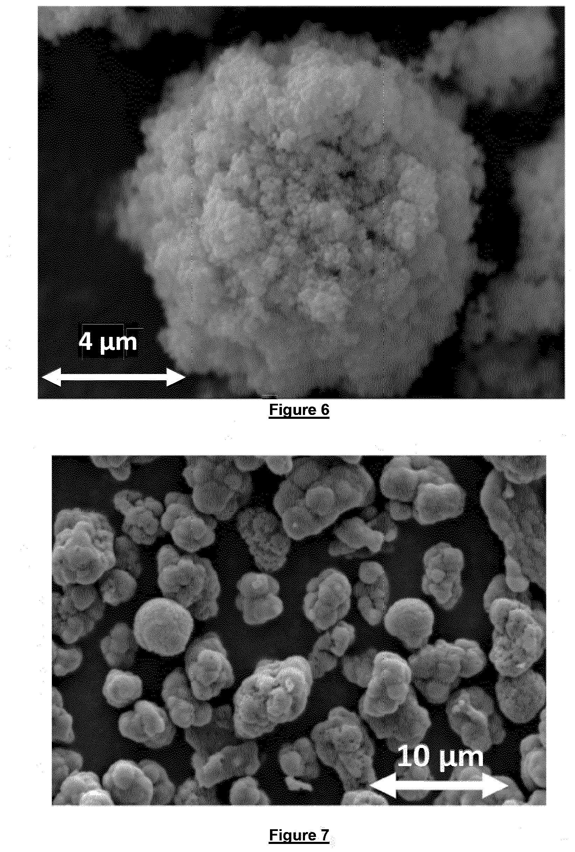

SEM image of the obtained material is provided at figure 6.

### Example 6

Carbon coated LFP active material was prepared according to the same method as example 5, except FePO₄ obtained in example 3 was used without adding glucose or any carbon source.

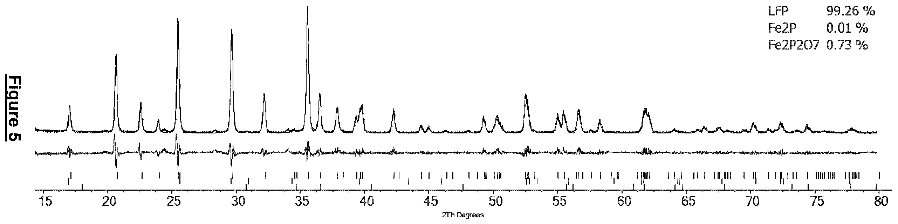

The Rietveld refinement of the obtained powder X-ray diffraction data is provided at figure 5. According to Rietveld refinement data, high purity of LFP phase was obtained, 99.26%, with an insignificant presence of Fe₂P and Fe₂P₂O₇.

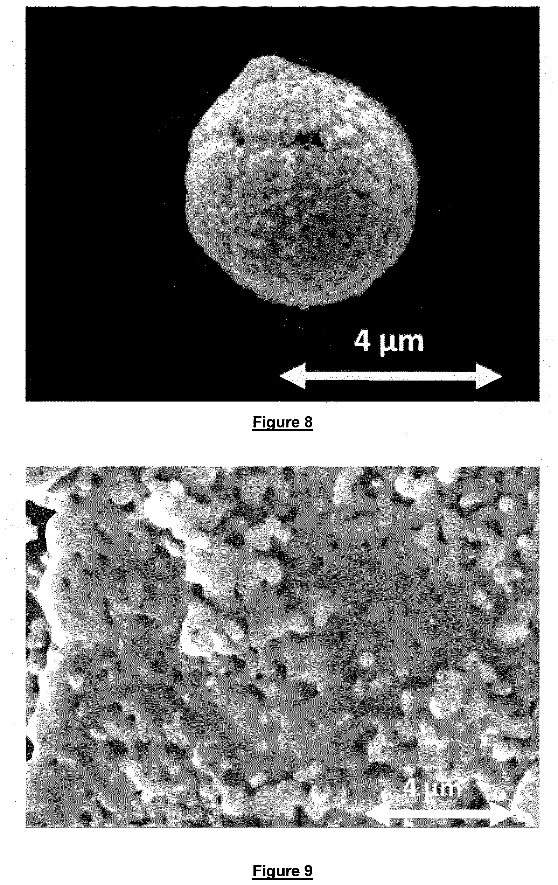

SEM images of the obtained material are provided at figures 7 and 8.

The SEM image of figure 7, of the synthesized LFP powders of example 6, reveals that all the samples have uniform spherical morphology with particle size distribution ranging from 4 to 15 µm.

Figure 7 shows the SEM images of the LFP obtained using FePO₄ in example 3. Improved spherical morphology with porous surface were obtained.

The cross-sectional SEM image in figure 9 indicates the presence of pores of about 100 nm inside LFP particles, suggesting that polymer nanoparticles were uniformly dispersed in the active materials. Thus enable a good electrolyte penetration inside the electrode composite material.

### Example 7

The prepared carbon coated LiFePO₄ composite cathode material of example 6, acetylene black, and polyvinylidene fluoride (PVDF) mixed at the ratio of 85:10:05 by weight are mixed with N-methylpyrollidone (NMP) to form the electrode slurry. Then, the resultant slurry was uniformly pasted on an aluminum foil substrate by using a doctor blade, followed by evaporating the solvent, NMP, in the oven at 60°C. The electrodes were then dried at 80°C under vacuum for 24 hours. The coin cells were assembled in a glove box. Lithium foil used as a counter and reference electrode, 1M LiPF6 in a mixture of ethylene carbonate, and dimethyl carbonate with a weight ratio of 1:1 used as the electrolyte and Celgard 2423 were used as a separator. The charge/discharge battery test were performed at C rate of 0.1C within the voltage window of 2.5-3.8 V vs. Li/Li⁺ at room temperature.

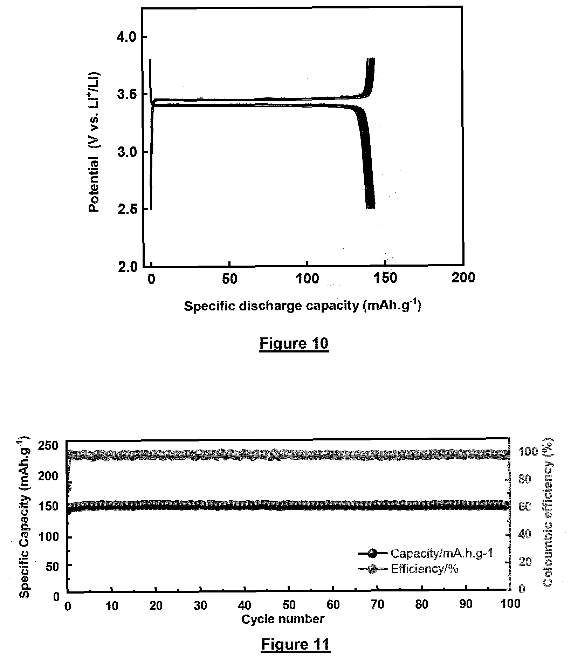

The electrochemical performance of carbon coated LFP obtained in example 6 was measured in coin-type half-cell. The cathode material delivered a specific discharge capacity of 150 mAh g⁻¹ with a flat voltage plateau at 3.45 V under a C-rate of 0.1C (figure 9). The cyclability remain stable during the first 100 cycles with a very high coulombic efficiency of 99.7, as can be seen in Figure 11.

The charging/ discharging characteristic profile of the lithium cell prepared by the electrode material of the example 6 is provided at figure 10.

The capacity retention profile of the lithium cell prepared by the electrode material of the example 6 is provided at figure 11.

### REFERENCES

(1) Rozier, P.; Tarascon, J. M. Review-Li-Rich Layered Oxide Cathodes for Next-Generation Li-lon Batteries: Chances and Challenges. J. Electrochem. Soc. 2015, 162 (14), A2490-A2499. https://doi.org/10.1149/2.0111514jes.
(2) Li, L.; Wu, L.; Wu, F.; Song, S.; Zhang, X.; Fu, C.; Yuan, D.; Xiang, Y. Review-Recent Research Progress in Surface Modification of LiFePO 4 Cathode Materials. J. Electrochem. Soc. 2017, 164 (9), A2138-A2150. https://doi.org/10.1149/2.1571709jes.
(3) Jow, T. R.; Delp, S. A.; Allen, J. L.; Jones, J.; Smart, M. C. Factors Limiting Li + Charge Transfer Kinetics in Li-lon Batteries. 2018, 165 (2), 361-367. https://doi.org/10.1149/2.1221802jes.
(4) Satyavani, T. V. S. L.; Srinivas Kumar, A.; Subba Rao, P. S. V. Methods of Synthesis and Performance Improvement of Lithium Iron Phosphate for High Rate Li-lon Batteries: A Review. Eng. Sci. Technol. an Int. J. 2016, 19 (1), 178-188. https://doi.org/10.1016/j.jestch.2015.06.002.
(5) GUIQING, H. High Performance Cathode Material LiFePO4, Its Precursors and Methods of Making Thereof, 2015.
(6) VINCENT, G.; ABDELBAST, G.; KAZUMA, H.; PIERRE, H.; SHINJI, S.; TAKEHIKO, S.; KAZUNORI, U.; KARIM, Z. METHOD OF PRODUCING ELECTRODE MATERIAL FOR LITHIUM-ION SECONDARY BATTERY AND LITHIUM-ION BATTERY USING SUCH ELECTRODE MATERIAL, 2015.
(7) YANG-KOOK, S. U. N.; SUNG-WOO, O. H.; HYUN-JOO, B.; MIN, O. H. S. OLIVINE-TYPE CATHODE ACTIVE MATERIAL PRECURSOR FOR LITHIUM BATTERY, OLIVINE-TYPE CATHODE ACTIVE MATERIAL FOR LITHIUM BATTERY, METHOD FOR PREPARING THE SAME AND LITHIUM BATTERY WITH THE SAME, 2011.

## Claims

1. A method for synthesizing a carbon coated lithium iron phosphate, the method comprising the following steps:
a. Preparing a FePO₄ hydrate precursor by mixing an iron containing compound and a phosphorus containing compound in a solvent at a pH ranging from 1.5 to 3.5 in presence of a precipitating agent that is also a carbon coating source;
b. Drying the FePO₄ hydrate precursor;
c. Mixing the dried FePO₄ precursor with a lithium salt;
d. Sintering the mixture obtained after step c) in an inert atmosphere at a temperature ranging from 550°C to 1000°C for 1 to 15h.

2. The method according to claim 1, wherein the iron containing compound is selected from the group consisting of FeSO₄·7H₂O, Fe(NO₃)₃.9H₂O, Fe₂(SO₄)₃ hydrates, FeCl₃ hydrates, FeSO₄, Fe₂(SO₄)₃, Fe(NO₃)₃ and FeCl₃.

3. The method according to claim 1 or 2, wherein the phosphorus containing compound is selected from the group consisting of H₃PO₄, (NH₄)₃PO₄, (NH₄)₂HPO₄ and (NH₄)H₂PO₄.

4. The method according to any one of claims 1 to 3, wherein the precipitating agent is an organic base of formula NR¹R²R³ wherein R', R² and R³ are each independently a hydrogen atom, an alkyl group, an alkene group, an alkyne group or an aryl group provided that at least one of R', R² and R³ is not H.

5. The method according to any one of claims 1 to 4, wherein the mixing is performed under stirring at a stirring speed of 100 to 1400 rpm.

6. The method according to any one of claims 1 to 5, wherein the mixing is performed at a temperature ranging from 25 to 100 °C.

7. The method according to any one of claims 1 to 6, wherein the drying the FePO₄ hydrate precursor is performed in an oven at a temperature ranging from 80 to 250°C or by spray-drying.

8. The method according to any one of claims 1 to 7, wherein the lithium salt is lithium carbonate Lithium carbonate (Li₂CO₃), Lithium citrate (Li₃C₆H₅O₇), Lithium hydroxide (LiOH), Lithium acetate (LiC₂H₃O₂), Lithium nitrate (LiNO₃), Lithium sulphate (Li₂SO₄).

9. The method according to any one of claims 1 to 8, wherein the dried FePO₄ precursor and the lithium salt are provided in stoichiometric amount.

10. The method according to any one of claims 1 to 9, wherein the dried FePO₄ and lithium salt are mixed by any powder mixing machine or by spray-drying.

11. A carbon coated lithium iron phosphate prepared in accordance with any one of claims 1 to 10.

12. A lithium battery comprising the carbon coated lithium iron phosphate as defined in claim 11.
